# EUROPEAN PATENT APPLICATION

(11) **EP 3 132 841 A1**
(43) Date of publication of application: **22.02.2017**
(21) Application number: 15780175.4
(22) Date of filing: 30.03.2015
(51) Int. Cl.: B01D 53/94, B01J 23/755, B01J 23/86, B01J 35/04, F01N 3/10, F01N 3/28

(54) **EXHAUST GAS PURIFICATION SYSTEM, CATALYST AND EXHAUST GAS PURIFICATION METHOD**

(30) Priority: 18.04.2014 JP 2014086426
(71) Applicant: Atsumitec Co., Ltd., Hamamatsu-shi, Shizuoka 433-8118 (JP)
(72) Inventor: UCHIYAMA, Naoki, Hamamatsu-shi Shizuoka 433-8118 (JP); UCHIYAMA, Yasuyuki, Hamamatsu-shi Shizuoka 433-8118 (JP); NAKABAYASHI, Seigou, Hamamatsu-shi Shizuoka 433-8118 (JP)
(74) Representative: MERH-IP Matias Erny Reichl Hoffmann Patentanwälte PartG mbB
(86) International application number: PCT/JP2015/059969
(87) International publication number: WO 2015/159698

(57) **Abstract**

To provide an exhaust gas purification system which is capable of purifying exhaust gas without a noble metal being carried, and maintaining exhaust gas purification performance even at high temperatures; a catalyst; and an exhaust gas purification method. A foamed metal catalyst (3) which is made of a transition metal element excepting platinum group elements and is formed of a metal having a porosity of not less than 80%, and which reduces NOx by being brought into contact with an exhaust gas having a hydrogen concentration of not less than a predetermined concentration (2%) and a temperature of not less than 230°C, is provided in an exhaust gas passage (2) of an internal combustion engine (1) that discharges the exhaust gas.

## Description

### Technical Field

The present invention relates to an exhaust gas purification system for purifying exhaust gas discharged from a heat engine, a catalyst, and an exhaust gas purification method.

### Background Art

In recent years, from the viewpoint of environmental preservation, to reduce hazardous substances in exhaust gases discharged from heat engines such as internal combustion engines such as an automobile engine, and external combustion engines of power plant, etc., there are known exhaust gas purification systems in which an exhaust gas purification device such as a catalyst is provided in an exhaust gas passage to purify exhaust gas.

For example, in an automotive engine or the like in which petroleum fuel such as gasoline and light oil is burnt, the exhaust gas mainly includes, as hazardous substances, carbon monoxide (CO), hydrocarbon (HC), and nitrogen oxides (NOx). To cope with such circumstances, there is provided, in an exhaust gas passage of an engine, a three-way catalyst which includes a heat resistant oxide mainly composed of silica (SiO₂), alumina (Al₂O₃), and ceria (CeO₂) as a carrier, and carries a noble metal made up of platinum group elements such as platinum (Pt), palladium (Pd), and rhodium (Rh), on the surface of the carrier. This three-way catalyst performs purification of exhaust gas by oxidizing or reducing respective hazardous substances into non-hazardous substances such as water (H₂O), carbon dioxide (CO₂), or nitrogen (N₂).

Further, in a lean-burn (lean combustion) gasoline engine and diesel engine, since combustion occurs at higher temperature and higher pressure with a relatively smaller quantity of fuel, a proportion of NOx discharge increases in comparison with those of HC and CO. Accordingly, such an engine is provided, in its exhaust gas passage, with a NOx occlusion reduction catalyst which occludes NOx by carrying alkaline substances (barium (Ba), potassium (K), etc.) that occludes NOx, and thereafter reduces occluded NOx by creating a reducing atmosphere such as by temporarily increasing a combustion injection quantity; and a so-called SCR (Selective Catalytic Reduction) catalyst which reduces occluded NOx by using ammonia (NH₃) which is hydrolyzed by adding a reducing agent such as urea water into the exhaust gas (see Patent Document 1).

### Prior Art Document

### Patent Document

Patent Document 1: Japanese Patent No. 5376450

### Summary of the Invention

### Problems to be solved by the Invention

However, each catalyst described above, including the technology of Patent Document 1, requires to carry a noble metal made up of platinum group elements such as Pt, Rh, and Pd. Since such noble metals are rare and at high prices, there is a demand for a catalyst which can exhibit exhaust gas purification performance requiring as little noble metals as possible.

Moreover, while a noble metal used for a catalyst is carried on a carrier by being dispersed in a particulate state, there is a problem that if the temperature becomes too high, the noble metal aggregates and the surface area thereof decreases, thereby deteriorating exhaust gas purification performance.

The present invention has been made to solve such problems, and has its object to provide an exhaust gas purification system which is capable of purifying an exhaust gas without a noble metal being carried, and maintaining the exhaust gas purification performance even at high temperatures, a catalyst, and an exhaust gas purification method.

### Means for Solving the Problems

In order to achieve the above described object, an exhaust gas purification system relating to the present invention includes: a heat engine that discharges exhaust gas; and a catalyst which is made of a transition metal element excepting platinum group elements, and is formed of a metal having a porosity of not less than 80%, the catalyst being provided in an exhaust gas passage of the heat engine to reduce NOx by being brought into contact with exhaust gas having a reducing gas concentration of not less than a predetermined concentration and a temperature of not less than 230°C.

Moreover, the catalyst relating to the present invention is made up of a transition metal element excepting platinum group elements and formed of a metal having a porosity of not less than 80% to reduce NOx under atmosphere having a reducing gas concentration of not less than a predetermined concentration and a temperature of not less than 230°C.

Further, an exhaust gas purification method relating to the present invention includes: providing a catalyst which is made of a transition metal element excepting platinum group elements and is formed of a metal having a porosity of not less than 80%, in an exhaust gas passage of the heat engine in which exhaust gas having a reducing gas concentration of not less than a predetermined concentration and a temperature of not less than 400°C flows; and reducing NOx in the exhaust gas by bringing the exhaust gas having a hydrogen concentration of not less than the predetermined concentration and a temperature of not less than 230°C into contact with the catalyst.

### Advantageous Effects of the Invention

According to the present invention using the above described means, it is possible to purify exhaust gas without a noble metal being carried, and maintain exhaust gas purification performance even at high temperatures.

### Brief Description of the Drawings

FIG. 1A is a schematic configuration diagram of a first embodiment in which an exhaust gas purification system of the present invention is applied to an exhaust gas passage of an internal combustion engine.
FIG. 1B is a schematic configuration diagram of a second embodiment in which an exhaust gas purification system of the present invention is applied to an exhaust gas passage of an internal combustion engine.
FIG. 1C is a schematic configuration diagram of a third embodiment in which an exhaust gas purification system of the present invention is applied to an exhaust gas passage of an internal combustion engine.
FIG. 2 is a graph showing variation of a NOx component in exhaust gas in front and behind a foamed metal catalyst.
FIG. 3 is a graph showing variation of a CO component in exhaust gas in front and behind a foamed metal catalyst.
FIG. 4 is a graph showing a change rate of each component in exhaust gas according to elapsed time.
FIG. 5 is a graph showing the result of a first test using hydrogen (H₂) as a reducing gas.
FIG. 6 is a graph showing the result of a second test using hydrogen (H₂) as a reducing gas.
FIG. 7 is a graph showing the result of a third test using carbon monoxide (CO) as a reducing gas.
FIG. 8 is a graph showing the result of a fourth test using methane (CH₄) as a reducing gas.
FIG. 9 is a graph showing the result of a firth test using propane (C₃H₈) as a reducing gas.
FIG. 10 is a graph showing the result of a sixth test using butane (C₄H₁₀) as a reducing gas.
FIG. 11 is a graph showing an exhaust gas purification performance when temperature is varied for a foamed metal catalyst of nickel simple substance.

### Mode for Carrying out the Invention

Hereinafter, embodiments of the present invention will be described based on the drawings.

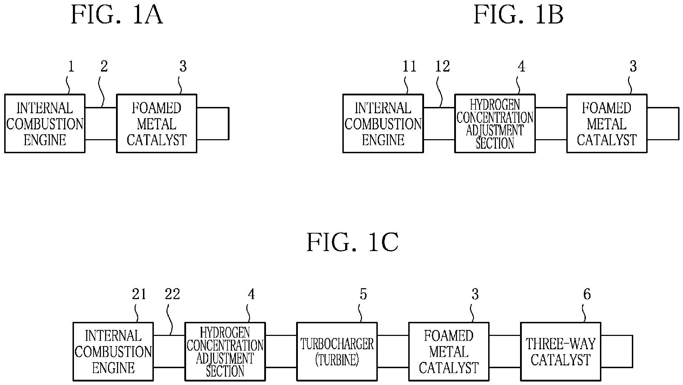

FIG. 1A shows a schematic configuration diagram of a first embodiment in which an exhaust gas purification system of the present invention is applied to an exhaust gas passage of an internal combustion engine; FIG. 1B shows that of a second embodiment; and FIG. 1C shows that of a third embodiment, respectively.

First, the exhaust gas purification system of the first embodiment is applied to an automobile in which, as shown in FIG. 1A, a foamed metal catalyst 3 is provided in an exhaust gas passage 2 of an internal combustion engine 1 (heat engine).

The internal combustion engine 1 is, for example, a gasoline engine. That is, combustion is performed with gasoline as the fuel, and the exhaust gas contains hazardous substance whose main contents include carbon monoxide (CO), hydrocarbon (HC), nitrogen oxides (NOx), and the like. Moreover, the internal combustion engine 1 in the first embodiment has an operating condition in which the exhaust gas contains hydrogen (H₂) of a hydrogen concentration of at least not less than 1.5%, and preferably a hydrogen concentration of 2 to 6% as a reducing gas, and the exhaust gas temperature is at least not less than 400°C, and preferably not less than 600°C. The reducing gas may be, without being limited to hydrogen, for example carbon monoxide (CO), and hydrocarbons (HC) such as methane (CH₄), propane (C₃H₈), and butane (C₄H₁₀).

The foamed metal catalyst 3 is made up of a foamed metal of open-cell foam, which is made of for example nickel (Ni) simple substance or a nickel alloy. That is, the foamed metal does not carry noble metals such as platinum (Pt), palladium (Pd), and rhodium (Rh). As the material for the foamed metal catalyst 3, nickel (Ni) is preferable since it exhibits sufficient exhaust gas purification performance from a relatively low temperature (400°), but this is not limiting. The material of the foamed metal catalyst 3 may be any transition metal element excepting platinum group elements, and a nickel cobalt alloy (NiCo), stainless steel (SUS) which is mainly composed of iron (Fe) and contains chromium (Cr) etc., and iron (Fe) simple substance are desirable besides nickel (Ni) simple substance and nickel alloys.

Further, the foamed metal catalyst 3 requires a sufficient specific surface area, and it preferably has a porosity of at least not less than 80%, and particularly not less than 97%. Note that while the foamed metal catalyst 3 utilizing a foamed metal is used as the catalyst in the present embodiment, any catalyst made up of a metal having a porosity of not less than 80% may be used. For example, it may also be a catalyst of a meshed laminated body in which metals formed into a mesh-shape are laminated, and a catalyst formed of a porous metal body. Furthermore, to ensure a large specific surface area, a metal catalyst whose surface is formed with dimples or formed into nanoparticles by plasma processing etc. may be applied to the catalyst surface.

The foamed metal catalyst 3 of such a configuration exhibits reduction functions of NOx, carbon monoxide (CO), and hydrocarbons (HC) when put in an atmosphere in which the reducing gas concentration in the exhaust gas is not less than a predetermined concentration (for example, a hydrogen concentration of 1.5%), and the temperature of the exhaust gas is not less than 230°C.

For example, in the exhaust gas purification system of the first embodiment, the foamed metal catalyst 3 is provided in the exhaust gas passage 2 through which exhaust gas having a hydrogen concentration of not less than 2% and an exhaust gas temperature of not less than 400°C flows. Then, when the operating condition of the internal combustion engine 1 becomes an operating condition in which exhaust gas having a hydrogen concentration of not less than 2% and an exhaust gas temperature of not less than 400°C is discharged, the exhaust gas comes into contact with the foamed metal catalyst 3 to be reduced into a non-hazardous substance, and thus the exhaust gas is purified.

Next, the exhaust gas purification system of a second embodiment is, as shown in FIG. 1B, applied to an automobile in which a hydrogen concentration adjustment section 4 as well as the foamed metal catalyst 3 is provided in an exhaust gas passage 12 of the internal combustion engine 11. Note that the foamed metal catalyst 3 has the same configuration as that of the first embodiment, and detailed description thereof will be omitted.

The internal combustion engine 11 in the second embodiment does not have an operating condition in which the hydrogen concentration in exhaust gas is not less than a predetermined concentration (1.5%), and instead it can adjust the hydrogen concentration in exhaust gas to be not less than the predetermined concentration (1.5%), preferably to be 2 to 6% in the hydrogen concentration adjustment section 4 (hydrogen concentration adjustment means).

The hydrogen concentration adjustment section 4 is provided between the internal combustion engine 11 and the foamed metal catalyst 3 in the exhaust gas passage 12. The hydrogen concentration adjustment section 4 is, for example, a reformer for reforming hydrocarbon (HC) into hydrogen (H₂) and carbon (C). Alternatively, it may be a hydrogen occlusion device that occludes hydrogen (H₂) at relatively lower temperatures, and discharges the occluded hydrogen (H₂) at higher temperatures. Besides, it may also be a so-called electro-chemical reactor which acts as an electrolysis apparatus that hydrogenates hydrocarbon upon being applied with electricity from the outside.

In thus configured exhaust gas purification system of the second embodiment, exhaust gas discharged from the internal combustion engine 11 flows into the hydrogen concentration adjustment section 4, and the hydrogen concentration is adjusted to be not less than a predetermined concentration (2%) by the hydrogen concentration adjustment section 4. Then, the exhaust gas after adjustment, which has a temperature of not less than 400°C, is fed to the foamed metal catalyst 3 so that NOx in the exhaust gas is reduced into a non-hazardous substance by the foamed metal catalyst 3, thus being purified.

Finally, an exhaust gas purification system of a third embodiment is applied to an automobile which includes, as shown in FIG. 1C, a turbocharger 5 and a three-way catalyst 6 in addition to the foamed metal catalyst 3 and the hydrogen concentration adjustment section 4 in a gas passage 22 of an internal combustion engine 21. Note that since the foamed metal catalyst 3 has the same configuration as that of the first embodiment, and the hydrogen concentration adjustment section 4 has the same configuration as that of second embodiment, detailed description thereof will be omitted.

The internal combustion engine 21 in the third embodiment intakes air which has been compressed by a compressor not shown of the turbocharger 5 to become a high temperature, to perform combustion. Thus, since the exhaust gas also becomes a high temperature, the internal combustion engine 21 has an operating condition in which fuel is periodically enriched to lower the exhaust gas temperature to protect the turbocharger 5 etc.

The turbocharger 5 is configured such that a turbine is arranged in the exhaust gas downstream side of the hydrogen concentration adjustment section 4 in the exhaust gas passage 22, and the turbine is rotated by exhaust gas flow thereby rotating the compressor on the same axis, and intake air is compresses by the rotation of the compressor.

The foamed metal catalyst 3 is provided in an exhaust gas passage 22 in the exhaust gas downstream side of the turbine of the turbocharger 5, and further a three-way catalyst 6 is provided in the exhaust gas downstream side of the foamed metal catalyst 3. The three-way catalyst 6 performs purification of hazardous substances which have not been purified by the foamed metal catalyst 3. Note that the three-way catalyst 6 may be provided in the exhaust gas downstream of the foamed metal catalyst 3 of the above described first and second embodiments. Moreover, the foamed metal catalyst 3 may be provided in the exhaust gas upstream side of the three-way catalyst 6, and for example may be provided in the exhaust gas upstream side of the turbine. Further, other exhaust gas purification apparatuses may be provided without being limited to the three-way catalyst 6.

In thus configured exhaust gas purification system of the third embodiment, the internal combustion engine 21 intakes air which has been compressed by the compressor of the turbocharger 5 to become a high temperature to perform combustion, and discharges exhaust gas having a temperature of not less than 400°C. The high temperature exhaust gas flows into the hydrogen concentration adjustment section 4, and the hydrogen concentration is adjusted to be not less than a predetermined concentration (2%) by the hydrogen concentration adjustment section 4. Especially when the fuel (HC) becomes rich, the hydrogen concentration adjustment section 4 can successfully adjust the hydrogen concentration to be not less than the predetermined concentration. Then, exhaust gas after adjustment, which has a temperature of not less than 400°C, rotates the turbine of the turbocharger 5 and is thereafter fed to the foamed metal catalyst 3 so that NOx in the exhaust gas is reduced and purified into a non-hazardous substance by the foamed metal catalyst 3. Thereafter, the exhaust gas passes through the three-way catalyst 6, thereby being further purified.

Hereinafter, actions and effects of the present embodiment will be described with reference to test results using an actual engine and a foamed metal catalyst.

As for the specifications of test, using the configuration of the above described first embodiment as a base, an air cooling 4-cycle single cylinder gasoline engine was used as the internal combustion engine, and a nickel (Ni) simple substance having a porosity of 97% was used as the foamed metal catalyst.

With such specifications of test, proportions of exhaust gas components were measured at three times at an inlet part and an outlet part of the foamed metal catalyst 3 at a predetermined timing while the internal combustion engine was operated at a rotational speed of 3500 rpm. Results thereof are shown in Table 1 below. Note that the exhaust gas temperature in the measurement at each time was approximately 800°C at the inlet part and approximately 650°C at the outlet part of the foamed metal catalyst.

**[Table 1]**

| Number of times | Measurement location | H2 (ppm) | CO (ppm) | NO (ppm) | NO2 (ppm) | NOx (ppm) |
|---|---|---|---|---|---|---|
| 1 | Inlet | 32514 | 89000 | 70.00 | 0.2 | 70.2 |
| | Outlet | 19462 | 64000 | 10.00 | 1.1 | 11.1 |
| 2 | Inlet | 31215 | 112700 | 75.01 | 1.07 | 76.04 |
| | Outlet | 18266 | 69700 | 6.90 | 0.00 | 6.90 |
| 3 | Inlet | 26999 | 100500 | 70.39 | 0.44 | 70.91 |
| | Outlet | 15186 | 59000 | 7.21 | 0.00 | 7.21 |

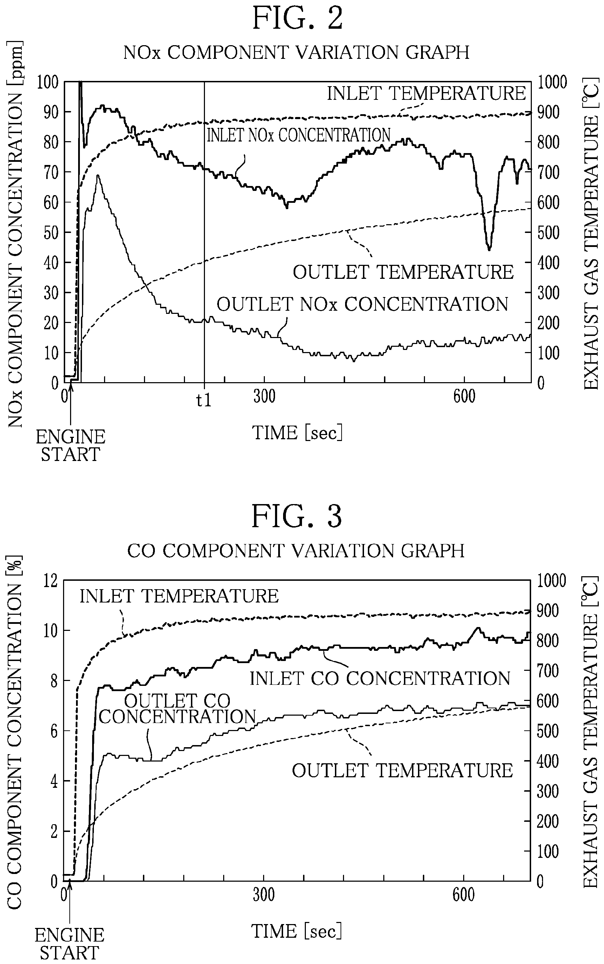

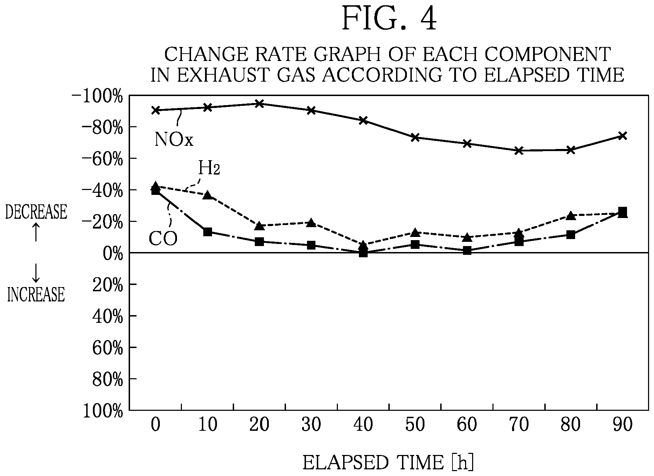

Moreover, FIG. 2 shows a graph showing the variation of NOx component in the exhaust gas in front and behind a foamed metal catalyst; FIG. 3 shows a graph showing the variation of CO component in the exhaust gas; and FIG. 4 shows a graph showing the change rate of each component in the exhaust gas according to elapsed time, respectively.

As shown in Table 1, 2 to 4% of hydrogen (H₂) was contained in exhaust gas from the internal combustion engine used in the present test, and it is seen that NOx was cut by approximately 80 to 90% when the exhaust gas passed through the foamed metal catalyst when it was in a state in which the hydrogen concentration was not less than a predetermined concentration (2%) and the exhaust gas temperature was not less than 400°C. Moreover, it is seen from Table 1 that CO was also cut by approximately 30 to 40%.

Next, referring to FIG. 2, the temperature of the inlet part (inlet temperature) of the foamed metal catalyst sharply rose right after the start of the engine, and accordingly the temperature of the outlet part (outlet temperature) of the foamed metal catalyst also rose as well. Further, regarding the NOx component concentration, an outlet NOx concentration was decreased by about 20 to 30 ppm with respect to an inlet NOx concentration from right after the start of the engine, and the amount of decrease increased as the inlet temperature and the outlet temperature rose. Then, it is seen that from around t1 point where the outlet temperature became 400°C, the outlet NOx concentration was stably decreased to not more than 20 ppm, and the outlet NOx concentration was suppressed to be not more than 20 ppm even when the inlet NOx concentration significantly varied.

Further, referring to FIG. 3, it is seen that the CO component concentration which was 8 to 10% at the inlet part of the foamed metal catalyst was decreased to 5 to 7% at the outlet part.

Further, as shown in the change rate of each component in exhaust gas shown in FIG. 4, CO was decreased at a rate of 0% to -40%, and H₂ was also decreased at a rate of 0% to -40%. Furthermore, it is seen that NOx was significantly decreased at a rate of -70% to -95%.

As described so far and as is obvious from the test results shown in Table 1 and FIGS. 2 to 4, the foamed metal catalyst exhibited significant NOx reduction performance and CO reduction performance, thereby realizing a good exhaust gas purification performance when under an atmosphere in which the hydrogen concentration was not less than 2%, and the exhaust gas temperature is not less than 400°C.

Although a foamed metal of a nickel simple substance was used in the above described tests, Table 2 shown below shows the result of measuring the proportions of exhaust gas components at the inlet part and the outlet part three times when a foamed metal catalyst made of stainless steel was used. Note that the exhaust gas temperature at each measurement was approximately 850°C at the inlet part of the foamed metal catalyst, and approximately 660°C at the outlet part.

**[Table 2]**

| Number of times | Measurement location | H2 (ppm) | CO (ppm) | NO (ppm) | NO2 (ppm) | NOx (ppm) |
|---|---|---|---|---|---|---|
| 1 | Inlet | 60517 | 10.29 | 77.5 | 0.5 | 78 |
| | Outlet | 51634 | 8.96 | 36.9 | 0.0 | 37 |
| 2 | Inlet | 57418 | 9. 68 | 97.8 | 0.8 | 99 |
| | Outlet | 51435 | 9.35 | 35.9 | 0.0 | 36 |
| 3 | Inlet | 54323 | 9.7 | 77.6 | 0.6 | 78 |
| | Outlet | 50433 | 9.2 | 35.3 | 0.0 | 35 |

In the test shown in Table 2, 5 to 6% of hydrogen (H₂) was contained in exhaust gas from the internal combustion engine, and it is seen that NOx was cut by approximately 50 to 65% as well when the exhaust gas passed through the foamed metal catalyst made of stainless steel when it was in a state in which the hydrogen concentration was not less than a predetermined concentration (2%) and the exhaust gas temperature was not less than 400°C. In this way, it is seen that stainless steel as well as nickel (Ni) is effective as the material for foamed metal catalyst.

Further, since the foamed metal catalyst 3 was formed solely of a foamed metal made of a transition metal element excepting platinum group elements, such as nickel (Ni), stainless steel (SUS), and iron (Fe), it was possible to significantly lower the cost compared with a catalyst utilizing a noble metal consisting of platinum group elements. Moreover, according the exhaust gas purification system in the present embodiment, since the catalyst was made up of a foamed metal alone, it was not likely that noble metal carried by a carrier aggregated due to high temperature, and decrease in the surface area occurred as with a conventional catalyst, and it was possible to maintain exhaust gas purification performance for a long period of time, as shown by the graph of FIG. 4.

The reason why the exhaust gas purification performance was maintained for long hours is considered that oxide film on the surface of the foamed metal catalyst was removed as a result of hydrogen being supplied as a reducing gas. Specifically, in the exhaust gas purification system in the present embodiment, first, nickel oxide (NiO) and nitrogen (N₂) were produced as a result of the nickel (Ni) component of the foamed metal catalyst 3 decomposing NOx (2NO + 2Ni → N₂ + 2NiO), and thereafter the oxide film was removed by hydrogen (H₂) as a reducing gas, returning to nickel (Ni) (2NiO + 2H₂ → 2Ni + 2H₂O). Such a reaction requires an occlusion material which temporarily occludes NOx, and is different in the configuration and purification process from a NOx occlusion catalyst which requires two processes: occlusion and reduction. Moreover, it is also different in the configuration and purification process from a SCR catalyst which requires a system for managing a urea tank and urea water, and which causes NOx to be reduced not with a catalyst metal, but through a direct chemical reaction with ammonia (NH₃) added to exhaust gas. That is, while the exhaust gas purification system in the present embodiment has a simpler configuration than a conventional catalyst system, it can purify NOx and maintain the exhaust gas purification performance.

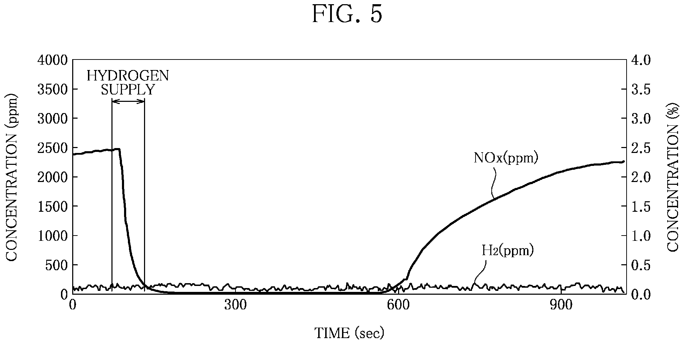

Further, FIGS. 5 to 10 show results of first to fifth tests illustrating relationship between reducing gas and exhaust gas purification performance. The first to fifth tests were carried out by providing, instead of the internal combustion engine of FIG. 1A, a pseudo gas supply apparatus for supplying pseudo exhaust gas (hereinafter, referred to as pseudo gas) to the foamed metal catalyst, and a heating apparatus for heating the foamed catalyst metal. From this pseudo gas supply apparatus, pseudo gas according to test content was supplied to the foamed metal catalyst, and the foamed metal catalyst was heated to a temperature according to test content by the heating apparatus. For the foamed metal catalyst to be used in the first to fifth tests, nickel (Ni) simple substance having a porosity of 97% was used. FIGS. 5 to 10 respectively show changes of the components of the pseudo gas to be supplied to the foamed metal catalyst, and the components of the gas to be discharged from the foamed metal catalyst.

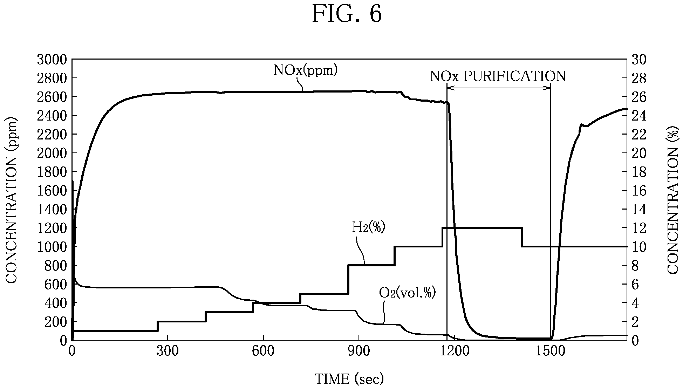

First, the first test shown in FIG. 5 and the second test shown in FIG. 6 confirmed NOx purification performance when hydrogen (H₂) was supplied as a reducing gas to a pseudo gas containing a large amount of NOx.

In the first test shown in FIG. 5, temporarily 1.5 Vol% (30 cc/min) of hydrogen (H₂) was supplied while maintaining the interior of the foamed metal catalyst at 535 to 545°C with the heating apparatus, and supplying a pseudo gas containing about 2000 cc/min of nitrogen (N₂) and about 5 cc/min of nitrogen monoxide (NO) from a pseudo gas supply apparatus.

In that way, as shown in FIG. 5, while the NOx concentration in a stage before hydrogen (H₂) was supplied was about 2500 ppm, the NOx concentration sharply decreased to substantially 0 when hydrogen (H₂) was started to be supplied. Further, after the supply of hydrogen (H₂) was stopped, the NOx concentration was maintained in a state of substantially 0 for a fixed period of time, and then gradually increased.

Moreover, in the second test shown in FIG. 6, hydrogen (H₂) was stepwisely increased or decreased by 1 to 12% while maintaining the temperature within the foamed metal catalyst at 535 to 545°C by the heating apparatus, and while supplying a pseudo gas containing about 1460 cc/min of nitrogen (N₂), about 500 cc/min of air, about 5 Vol% (2 cc/min) of oxygen (O₂), and 2600 ppm of nitrogen monoxide (NO) from the pseudo gas supply apparatus.

As a result of this, as shown in FIG. 6, as a result of stepwisely increasing the hydrogen concentration (H₂), the oxygen (O₂) concentration decreased accordingly. Then, when the oxygen concentration became substantially 0, the NOx concentration sharply decreased until reaching substantially 0, as well.

From these tests, it is seen that under a reducing atmosphere in which oxygen concentration has become substantially 0, hydrogen (H₂) functions as a reducing gas so that the foamed metal catalyst at a temperature not less than a predetermined temperature exhibits NOx purification performance.

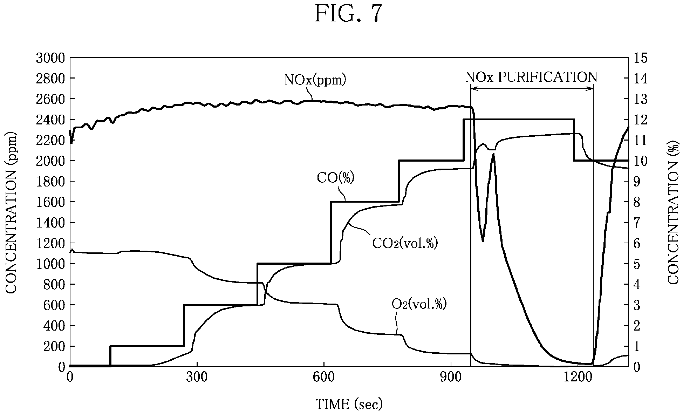

Next, the third test shown in FIG. 7 confirmed the exhaust gas purification performance when carbon monoxide (CO) was used as a reducing gas. In the third test, carbon monoxide (CO) concentration was increased by 200 ppm at every fixed period while maintaining the temperature within the foamed metal catalyst at 535 to 545°C with the heating apparatus, and supplying a pseudo gas containing 1460 cc/min of nitrogen (N₂), 500 cc/min of air, about 5 Vol% (2 cc/min) of oxygen (O₂), and 2600 ppm of nitrogen monoxide (NO) from the pseudo gas supply apparatus.

In that way, as shown in FIG. 7, every time carbon monoxide (CO) was increased stepwisely, oxygen (O₂) decreased and carbon dioxide (CO₂) increased. Then, when oxygen (O₂) decreased to not more than about 0.5 Vol%, NOx started to sharply decrease and became substantially 0. Then, when carbon monoxide (CO) was decreased, NOx concentration increased.

In this way, it is seen that when oxygen (O₂) runs out thereby producing a reducing atmosphere, not only hydrogen (H₂) but also carbon monoxide (CO) functions as a reducing gas so that the foamed metal catalyst causes NOx to be significantly decomposed. That is, the present foamed metal catalyst can be used to purify not only NOx but also carbon monoxide (CO).

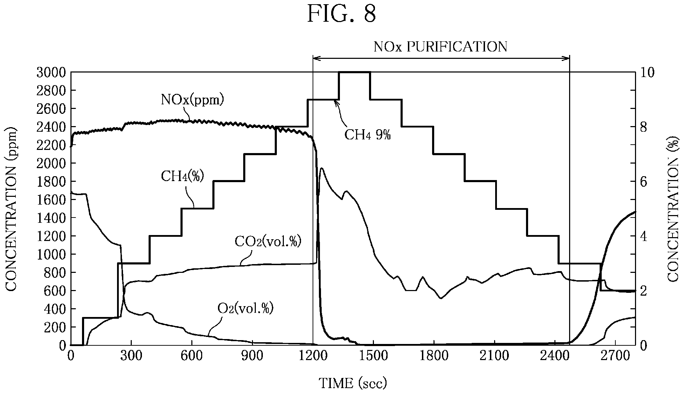

The fourth to sixth tests shown in FIGS. 8 to 10 have confirmed exhaust gas purification performances when hydrocarbon (HC) was used as the reducing gas. In these tests, hydrocarbon (HC) was increased at every fixed period while maintaining the temperature within the foamed metal catalyst at 535 to 545°C with the heating apparatus, and supplying a pseudo gas containing 1460 cc/min of nitrogen (N₂), 500 cc/min of air, about 5 Vol% (2 cc/min) of oxygen (O₂), and 2600 ppm of nitrogen monoxide (NO) from the pseudo gas supply apparatus.

First, in.the fourth test of FIG. 8, using methane (CH₄) among hydrocarbon (HC) as a reducing gas, at every fixed period, methane (CH₄) concentration was increased by 1.5 to 3% at a time, and was decreased by 1.5% at a time after reaching about 10%. In that way, as shown in FIG. 7, when the concentration of methane (CH₄) was stepwisely increased, and until reached not less than a constant (9%), oxygen (O₂) decreased and carbon dioxide (CO₂) increased. Then, when the oxygen (O₂) concentration became substantially 0, the NOx concentration started to sharply decrease and became substantially 0.

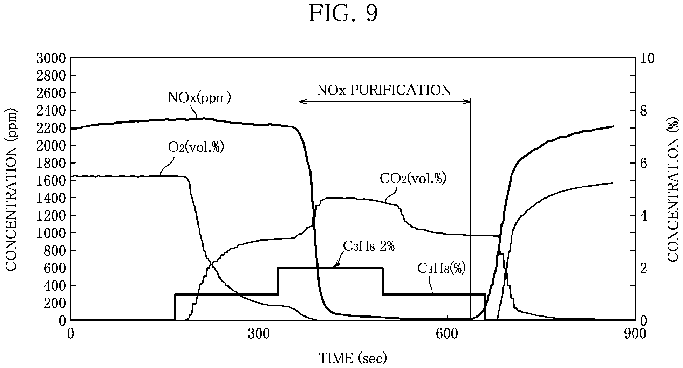

Further, in the fifth test of FIG. 9, using propane (C₃H₈) among hydrocarbon (HC) as a reducing gas, propane (C₃H₈) concentration was increased by about 1% at every fixed period, and was decreased by 1% at a time after reaching 2%. In that way, as shown in FIG. 8, when propane (C₃H₈) was increased stepwisely, the oxygen (O₂) concentration decreased and the carbon dioxide (CO₂) concentration increased. Then, when the oxygen (O₂) concentration became substantially 0, NOx concentration started to sharply decrease, reaching substantially 0.

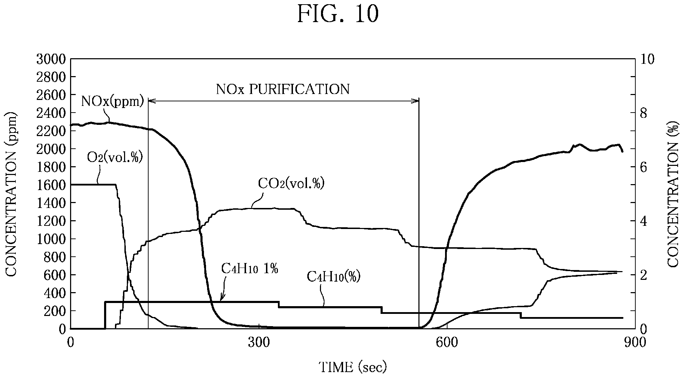

Further, in the sixth test of FIG. 10, using butane (C₄H₁₀) among hydrocarbon (HC) as a reducing gas, at every fixed period, butane (C₄H₁₀) concentration was increased to about 1%, and thereafter was stepwisely decreased by 0.2% at a time. In that way, as shown in FIG. 10, when the butane (C₄H₁₀) concentration was increased, the oxygen (O₂) concentration decreased and the carbon dioxide (CO₂) concentration increased. Then, when the oxygen (O₂) concentration became substantially 0, the NOx concentration started to sharply decrease, reaching substantially 0.

Thus, from test results of FIGS. 4 to 6, it is seen that when the foamed metal catalyst was brought into a reducing atmosphere, hydrocarbon (HC) such as methane (CH₄), propane (C₃H₈), and butane (C₄H₁₀) acts as a reducing gas so that NOx was significantly decomposed. Moreover, it is seen that as the number of carbons increases in hydrocarbon (HC), a same level of NOx purification performance is exhibited by a smaller amount thereof.

Thus, from the first to sixth test results described so far, it is seen that when the foamed metal catalyst is at or above a predetermined temperature and a reducing gas is present under a reducing atmosphere, it exhibits NOx purification performance. It is inferred that even if oxide film occurs on the surface of the foamed metal catalyst as NOx is purified, the oxide film is removed by the reducing gas and thus exhaust gas purification performance is maintained.

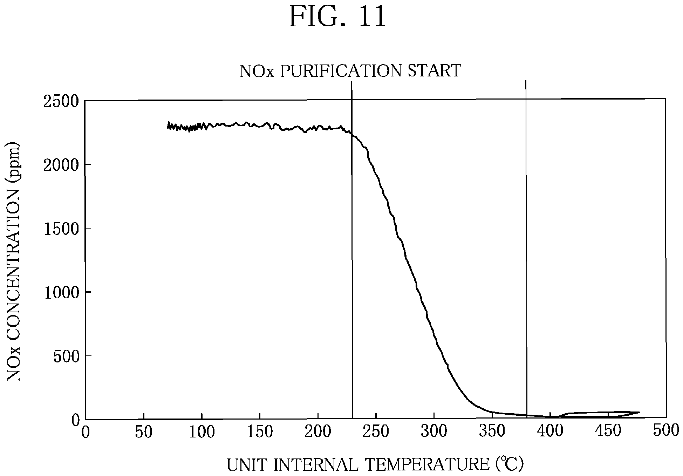

Further, a test for confirming the exhaust gas purification performance when temperature is varied for a foamed metal catalyst of a nickel simple substance was carried out. FIG. 11 is a graph showing the test results. In the test, the foamed metal catalyst was gradually heated by a heating apparatus while supplying a pseudo gas containing about 5 cc/min of nitrogen monoxide (NO), about 2000 cc/min of nitrogen (N₂), and 30 cc/min of hydrogen (H₂) from a pseudo gas supplying apparatus.

As a result of that, as shown in FIG. 11, the NOx concentration, which was initially about 2300 ppm, started to decrease from about 230°C and became not more than 10 ppm at about 380°C. From this, it is seen that the foamed metal catalyst starts to exhibit exhaust gas purification performance from 230°C, and fully functions as a catalyst at not less than 380°C.

From what has been described so far, according to an embodiment of the present invention, it is possible to purify exhaust gas without a noble metal being carried, and maintain exhaust gas purification performance.

Although description of embodiments relating to the present invention has been completed, the embodiment will not be limited to those described above.

Although the internal combustion engines 1, 11, 21 were assumed to be a gasoline engine in the above described embodiments, the internal combustion engine will not be limited to gasoline engines, and may be for example a diesel engine and the like. Moreover, the exhaust gas purification system, the catalyst, and the exhaust gas purification method relating to the present invention will not be limited to applications to internal combustion engines, but may be applied to heat engines including plants which utilize hydrocarbon fuels, and external combustion engines.

### (Aspects of the present invention)

An exhaust gas purification system relating to a first aspect of the present invention includes: a heat engine that discharges exhaust gas; and a catalyst which is made of a transition metal element excepting platinum group elements, and is formed of a metal having a porosity of not less than 80%, the catalyst being provided in an exhaust gas passage of the heat engine to reduce NOx by being brought into contact with an exhaust gas having a reducing gas concentration of not less than a predetermined concentration and a temperature of not less than 230°C.

An exhaust gas purification system relating to a second aspect of the present invention is the exhaust gas purification system of the first aspect, in which the reducing gas is hydrogen, and the exhaust gas purification system further includes hydrogen concentration adjustment means for adjusting hydrogen concentration of exhaust gas discharged from the heat engine to be not less than the predetermined concentration and feed the same to the catalyst.

An exhaust gas purification system relating to a third aspect of the present invention is the exhaust gas purification system of the first or the second aspect, in which the heat engine includes, in an exhaust gas passage, a turbocharger having a turbine, and a three-way catalyst arranged in an exhaust gas downstream side of the turbine, and the catalyst is arranged in an exhaust gas upstream side of the three-way catalyst.

An exhaust gas purification system relating to a fourth aspect of the present invention is the exhaust gas purification system of any of the first to third aspects, in which the metal of the catalyst is formed of a foamed metal.

An exhaust gas purification system relating to a fifth aspect of the present invention is the exhaust gas purification system of any of the first to third aspects, in which the metal of the catalyst is formed by laminating a mesh-shaped metal.

An exhaust gas purification system relating to a sixth aspect of the present invention is the exhaust gas purification system of any of the first to fifth aspects, in which the metal of the catalyst is nickel.

An exhaust gas purification system relating to a seventh aspect of the present invention is the exhaust gas purification system of any of the first to fifth aspects, in which the metal of the catalyst is stainless steel.

A catalyst relating to an eighth aspect of the present invention includes a transition metal element excepting platinum group elements, the catalyst being formed of a metal having a porosity of not less than 80%, and being adapted to reduce NOx under atmosphere having a reducing gas concentration of not less than a predetermined concentration and a temperature of not less than 230°C.

A catalyst relating to a ninth aspect of the present invention is the catalyst of the eighth aspect, in which the metal is a foamed metal.

A catalyst relating to a tenth aspect of the present invention is the catalyst of the eighth aspect, in which the metal is formed by laminating a mesh-shaped metal.

A catalyst relating to an eleventh aspect of the present invention is the catalyst of any of the eighth to tenth aspects, in which the metal is nickel.

A catalyst relating to a twelfth aspect of the present invention is the catalyst of any of the eighth to tenth aspects, in which the metal is stainless steel.

An exhaust gas purification method relating to a thirteenth aspect of the present invention includes: providing a catalyst which is made of a transition metal element excepting platinum group elements, and is formed of a metal having a porosity of not less than 80%, in an exhaust gas passage of the heat engine in which exhaust gas having a reducing gas concentration of not less than a predetermined concentration and a temperature of not less than 230°C flows; and reducing NOx in the exhaust gas by bringing the exhaust gas having a reducing gas concentration of not less than a predetermined concentration and a temperature of not less than 400°C into contact with the catalyst.

### Explanation of Reference Signs

1, 11, 21 Internal combustion engine
2, 12, 22 Exhaust gas passage
3 Foamed metal catalyst (Catalyst)
4 Hydrogen concentration adjustment section (Hydrogen concentration adjustment means)
5 Turbocharger
6 Three-way catalyst

## Claims

1. An exhaust gas purification system, comprising:
a heat engine that discharges exhaust gas; and
a catalyst which is made of a transition metal element excepting platinum group elements, and is formed of a metal having a porosity of not less than 80%, the catalyst being provided in an exhaust gas passage of the heat engine to reduce NOx by being brought into contact with an exhaust gas having a reducing gas concentration of not less than a predetermined concentration and a temperature of not less than 230°C.

2. The exhaust gas purification system according to claim 1, wherein
the reducing gas is hydrogen, and the exhaust gas purification system further comprises hydrogen concentration adjustment means for adjusting a hydrogen concentration of exhaust gas discharged from the heat engine to be not less than the predetermined concentration and feed the same to the catalyst.

3. The exhaust gas purification system according to claim 1 or 2, wherein
the heat engine comprises, in an exhaust gas passage, a turbocharger having a turbine, and a three-way catalyst arranged in an exhaust gas downstream side of the turbine, and
the catalyst is arranged in an exhaust gas upstream side of the three-way catalyst.

4. The exhaust gas purification system according to any of claims 1 to 3, wherein
the metal of the catalyst is formed of a foamed metal.

5. The exhaust gas purification system according to any of claims 1 to 3, wherein
the metal of the catalyst is formed by laminating a mesh-shaped metal.

6. The exhaust gas purification system according to any of claims 1 to 5, wherein
the metal of the catalyst is nickel.

7. The exhaust gas purification system according to any of claims 1 to 5, wherein
the metal of the catalyst is stainless steel.

8. A catalyst, comprising a transition metal element excepting platinum group elements, the catalyst being formed of a metal having a porosity of not less than 80%, and being adapted to reduce NOx under atmosphere having a reducing gas concentration of not less than a predetermined concentration and a temperature of not less than 230°C.

9. The catalyst according to claim 8, wherein the metal is a foamed metal.

10. The catalyst according to claim 8, wherein the metal is formed by laminating a mesh-shaped metal.

11. The catalyst according to any of claims 8 to 10, wherein the metal is nickel.

12. The catalyst according to any of claims 8 to 10, wherein the metal is stainless steel.

13. An exhaust gas purification method, comprising:
providing a catalyst which is made of a transition metal element excepting platinum group elements, and is formed of a metal having a porosity of not less than 80%, in an exhaust gas passage of the heat engine in which exhaust gas having a reducing gas concentration of not less than a predetermined concentration and a temperature of not less than 230°C flows; and
reducing NOx in the exhaust gas by bringing the exhaust gas having a reducing gas concentration of not less than a predetermined concentration and a temperature of not less than 230°C into contact with the catalyst.
